# EUROPÄISCHE PATENTSCHRIFT

(11) **EP 2 689 482 B1**
(45) Veröffentlichungstag und Bekanntmachung des Hinweises auf die Patenterteilung: **17.07.2024**
(21) Anmeldenummer: 12714590.2
(22) Anmeldetag: 12.03.2012
(51) Int. Cl.: H01M 50/24, H01M 50/30, H01M 50/40, H01M 10/0525, H01M 10/52

(54) **DRUCKAUSGLEICHSELEMENT, GEHÄUSE EIN DRUCKAUSGLEICHSELEMENT AUFWEISEND, LITHIUM IONEN-AKKUMULATOR SOWIE KRAFTFAHRZEUG**
PRESSURE EQUALIZATION ELEMENT, HOUSING COMPRISING A PRESSURE EQUALIZATION ELEMENT, LITHIUM ION ACCUMULATOR AND MOTOR VEHICLE
ÉLÉMENT DE COMPENSATION DE PRESSION, BOÎTIER PRÉSENTANT UN ÉLÉMENT DE COMPENSATION DE PRESSION, ACCUMULATEURS AUX IONS DE LITHIUM AINSI QUE VÉHICULE AUTOMOBILE

(30) Priorität: 22.03.2011 DE 102011005916
(43) Veröffentlichungstag der Anmeldung: 29.01.2014
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: GLESS, Michael, 70437 Stuttgart-Zazenhausen (DE); ZIMMERMANN, Ulrich, 74394 Hessigheim (DE)
(74) Vertreter: Bee, Joachim
(86) Internationale Anmeldenummer: PCT/EP2012/054241
(87) Internationale Veröffentlichungsnummer: WO 2012/126758

(56) Entgegenhaltungen:
- EP-A1- 0 504 573
- EP-A1- 0 504 573
- WO-A1-2009/001947
- WO-A1-2009/001947
- WO-A1-2011/072936
- DE-A1- 102008 034 698
- DE-A1- 102008 034 698
- DE-A1- 102008 034 879
- DE-A1- 102008 034 879
- US-A- 4 561 559
- US-A- 4 561 559
- US-B1- 6 196 409

## Beschreibung

Die vorliegende Erfindung betrifft ein Druckausgleichselement für ein Gehäuse mit einer wasserundurchlässigen Membran, ein Gehäuse mit einem Druckausgleichselement, einen Lithium-Ionen-Akkumulator mit einem Gehäuse sowie ein Kraftfahrzeug.

### Stand der Technik

Bei Geräten, wie beispielsweise Batterien, die über ein Gehäuse mit einem eingeschlossenen Luftvolumen, das Temperaturänderungen und damit Volumenänderungen ausgesetzt ist, verfügen, wird üblicherweise ein Druckausgleichselement (DAE) verwendet. Dies ist eine mikroporöse Membran z. B. aus Polytetrafluorethylen, wie eine Goretex-Membran, die luftdurchlässig aber wasserdicht ist. Dieses DAE sorgt für perfekten Druckausgleich, das heißt, mit geringer Verzögerung stellt sich innerhalb und außerhalb des Gehäuses der gleiche Luftdruck ein. Dieser Druckausgleich ist notwendig, wenn das Gehäuse dem möglichen Unterschied von Innen- zu Außendruck nicht standhalten kann. Durch Temperatur- und Außendruckänderungen, z. B. bei einem Flugtransport, ist ein Druckunterschied bis zu 1 bar möglich.

Ein Problem bei der Verwendung derartiger Druckausgleichselemente mit wasserundurchlässigen Membranen, wie einer Goretex^{®}-Membran ist, dass diese zwar bezüglich Wassers im flüssigen Aggregatzustand dicht sind, jedoch nicht für Wasserdampf. Bei feuchter Außenatmosphäre kann also feuchte Luft in das Gehäuse eindringen. Befindet sich innerhalb des Gerätes ein Bereich, der auf Temperaturen unterhalb der Außentemperatur gekühlt wird, kann es zu Kondensation dieser Luftfeuchtigkeit auf den gekühlten Bereichen kommen. Diese Kondensation kann zu Ausfällen des Gerätes führen.

WO 2009/001947 A1 offenbart ein druckregulierendes Ventil für einen Behälter, das einen Gasstrom regelt.

EP 0 504 573 A1 offenbart einen wartungsfreien Bleiakkumulator mit einem Zweiwegsentlastungsventil, welches bei einem durch eine Feder einstellbaren Überdruck nach außen und bei einem ebenfalls durch eine Feder einstellbaren Unterdruck nach innen öffnet.

US 4 561 559 A offenbart ein Tankbelüftungsventil mit einem ersten Druckstück und einem zweiten Druckstück in dem ersten Druckstück.

DE 10 2008 034879 A1 offenbart eine Batterie in einem Batteriegehäuse, das eine Öffnung zur Verringerung eines Innendrucks aufweist, wobei an der Öffnung ein Rohransatz zur Abführung von Ausgasungen angeordnet ist.

DE 10 2008 034698 A1 offenbart eine Batterie mit einem Batteriegehäuse, umfassend ein Feuchtigkeit sorbierendes Element.

US 6 196 409 B1 offenbart ein Lüftungsmittel für einen Behälter mit einem Lüftungselement, welches den Austausch von Gasen erlaubt, wobei auch eine Phasentrennung an einer Membran möglich ist.

WO 2011/072936 A1 offenbart eine Vorrichtung und ein Verfahren zur Minderung der Feuchtigkeit eines Gases in einem Gehäuseinnenraum.

### Offenbarung der Erfindung

Erfindungsgemäß wird ein Druckausgleichselement (DAE) für ein Gehäuse mit einer wasserundurchlässigen Membran, vorzugsweise aus Polytetrafluorethylen, zur Verfügung gestellt, wobei der Membran ein in zwei Richtungen wirkendes Überdruckventil oder eine Kombination von zwei gegensätzlich wirkenden Überdruckventilen vor- oder nachgeschaltet ist. Die Membran und das Überdruckventil oder die Überdruckventile werden zu einer geschlossenen Einheit zusammengefasst. Im Inneren (19) im Bereich des nach innen wirkenden Überdruckventils (18) der geschlossenen Einheit ist ein Kondensationsblech (20) angeordnet, das einen Abtropfpunkt (23) aufweist, der im Bereich des nach außen wirkenden Überdruckventils (18) liegt.

Geeignete Materialien für derartige Membranen, die luftdurchlässig sind, jedoch ein Durchtreten von Flüssigkeiten verhindern, sind dem Fachmann aus dem Stand der Technik bekannt.

Ebenso sind dem Fachmann geeignete Überdruckventile, wie beispielsweise Schnabelventile, aus dem Stand der Technik bekannt.

Gegenstand der Erfindung ist auch ein Gehäuse für ein Gerät, beispielsweise für einen Lithium-Ionen-Akkumulator mit einer aktiven Klimatisierung, das mit dem vorgenannten Druckausgleichselement ausgerüstet ist.

Die nachfolgenden Ausführungen betreffen das Druckausgleichselement und das damit ausgerüstete Gehäuse gleichermaßen.

Das Überdruckventil oder die Überdruckventile wird/werden derart eingestellt, dass ein Druckausgleich nur erfolgt, wenn der Druckunterschied zwischen dem Innenraum des Gehäuses und der Umgebung so groß wird, dass er sich der Stabilitätsgrenze des Gehäuses nähert. Dieser kritische Druck kann für Über-und Unterdruck unterschiedlich sein. Dadurch wird vorteilhafterweise verhindert, dass es durch häufige kleine Druckunterschiede, beispielsweise durch leichte Änderungen der Außentemperatur, zu Luft- und damit Feuchtigkeitseintrag in das Gehäuse kommt. Nur bei größeren, aber im Allgemeinen seltener auftretenden Druckunterschieden würde dann ein Luftaustausch stattfinden.

Kern der vorliegenden Erfindung ist es, das Volumen des Luftaustausches möglichst weit zu reduzieren. Damit wird auch die Menge der in das Gehäuse transportierten Luftfeuchte reduziert.

Vorzugsweise verfügt das Gehäuse zusätzlich über übliche Mittel zur Entfernung von Luftfeuchtigkeit, wie beispielsweise ein Trockenmittel, so dass die geringe Menge an Luftfeuchtigkeit, die dennoch in das Gehäuse bei einem Druckausgleich gelangt, sicher entfernt werden kann. Diese Mittel sind dem Fachmann aus dem Stand der Technik bekannt.

Die Membran und das Überdruckventil oder die Überdruckventile werden vorzugsweise zu einer geschlossenen Einheit zusammengefasst, die in der Wandung des Gehäuses integriert ist. Die geschlossene Einheit kann beispielsweise durch eine Rohrkonstruktion ausgebildet sein, bei der in einem Endbereich die Membran und im gegenüberliegenden Endbereich der Rohrkonstruktion das Ventil oder die Ventile angeordnet sind.

Die Einheit wird vorzugsweise derart in die Wandung des Gehäuses integriert, dass vom Innenraum aus betrachtet erst die Membran gegeben ist und dann das Überdruckventil oder die Überdruckventile folgt/folgen. Mit dieser bevorzugten Ausführungsform lässt sich vorteilhafterweise beim Einströmen von Luft die adiabatische Expansion zur zusätzlichen Luftentfeuchtung heranziehen.

So öffnet sich bei einem externen Überdruck das Überdruckventil, beim Eintritt kommt es zur Entspannung der Luft, die sich dadurch abkühlt. Dabei verringert sich ihre Fähigkeit zur Feuchteaufnahme und bei hoher relativer Luftfeuchte wird ein Teil der Luftfeuchte im Bereich der geschlossenen Einheit kondensieren, so dass ein Durchtritt durch die Membran nicht mehr möglich ist. Damit gelangt das Kondensat nicht in den Innenraum des Gehäuses.

Um das kondensierte Wasser aus der geschlossenen Einheit wieder abzuleiten, ist das sich nach außen öffnende Überdruckventil derart anzuordnen, dass sich das Wasser im Bereich des Überdruckventils sammeln kann. Bei einem Überdruck im Innenraum des Gehäuses und dessen Ausgleich durch das Überdruckventil wird das Kondenswasser nach außen befördert. Da sich das Wasser in der geschlossenen Einheit in Richtung der Schwerkraft bewegt, ist das entsprechende Überdruckventil vorzugsweise am tiefsten Punkt der geschlossenen Einheit angeordnet. In diesem Bereich kann zusätzlich eine Vertiefung zur Aufnahme des Wassers vorgesehen sein.

Vorzugsweise ist im Einströmungsbereich im Inneren der geschlossenen Einheit hinter dem Überdruckventil ein Kondensationsblech angeordnet, so dass sich das Kondensat nicht im gesamten Innenraum der geschlossenen Einheit verteilen kann. Zudem ist das Kondensationsblech vorteilhafterweise mit einer Neigung in Richtung des tiefsten Punktes der geschlossenen Einheit versehen, so dass das Kondensat über dem Teil des Ventils abtropft, durch den die Luft in Richtung Außenraum strömt. Beim nächsten Öffnen dieses Ventils wird Kondenswasser, wie bereits ausgeführt, mit nach außen transportiert. Es ist jedoch auch möglich, das Kondensat in eine andere geeignete Position zum schnellen Austrag durch eine geeignete Wahl des Abtropfpunktes zu transportieren.

Je nach Positionierung der geschlossenen Einheit am Gehäuse kann die Rohrkonstruktion angepasst sein, um das Kondensat im Inneren optimal zu transportieren. So kann bei einer bodenseitigen Anordnung des Druckausgleichselements die Rohrkonstruktion geradlinig verlaufen und bei einer seitlichen Anbringung kann die Rohrkonstruktion in Richtung der Schwerkraft abgewinkelt sein.

Es ist nach einer anderen Ausführungsform der Erfindung auch möglich, diese vorgenannte Reihenfolge von Membran und Überdruckventilen umzukehren, so dass vom Innenraum aus betrachtet erst das Überdruckventil oder die Überdruckventile gegeben ist/sind und dann die Membran folgt, so kann ein Schmutzeintrag in die geschlossene Einheit verhindert werden.

Es ist ebenfalls möglich, auf beiden Seiten des Überdruckventils oder der Überdruckventile eine Membran anzuordnen. Um bei dieser Anordnung auch von dem adiabatischen Effekt zur Luftentfeuchtung Gebrach machen zu können, wird die außen liegende Membran vorzugsweise nur im Bereich des nach innen wirkenden Überdruckventils bzw. des entsprechenden Teils des Überdruckventils angeordnet, so dass die ausströmende Luft durch das nach außen wirkende Überdruckventil bzw. den entsprechenden Teil eines Überdruckventils kondensiertes Wasser abtransportieren kann.

Die Erfindung betrifft zudem Lithium-Ionen-Akkumulatoren mit aktiver interner Kühlung, die in einem erfindungsgemäßen Gehäuse angeordnet sind.

Gegenstand der Erfindung ist zudem ein Kraftfahrzeug mit einem elektrischen Antriebsmotor zum Antreiben des Kraftfahrzeugs und einem mit dem elektrischen Antriebsmotor verbundenen oder verbindbaren erfindungsgemäßen Lithium-Ionen-Akkumulator, der erfindungsgemäß ausgestaltet ist.

Vorteilhafte Weiterbildungen der Erfindung sind in den Unteransprüchen angegeben beschrieben.

### Zeichnung

Ein Ausführungsbeispiel der Erfindung wird anhand einer Zeichnung und der nachfolgenden Beschreibung näher erläutert. Es zeigt:

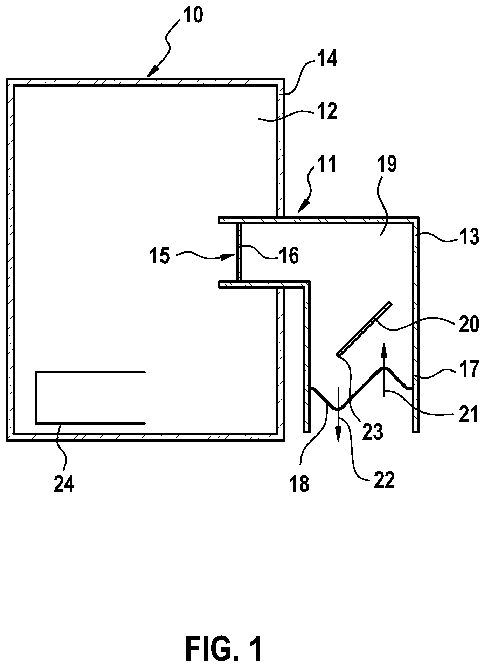

Figur 1 in einer schematischen Ansicht ein Gehäuse mit einem erfindungsgemäßen Druckausgleichselement.

### Ausführungsform der Erfindung

In Figur 1 wird schematisch ein Gehäuse 10 für eine nicht dargestellte Vorrichtung, beispielsweise einen Lithium-Ionen-Akkumulator, mit einem Druckausgleichselement 11 dargestellt. Der Innenraum 12 des Gehäuses 10 ist gegenüber der Umgebung abgeschlossen, lediglich über das Druckausgleichselement 11 kann Luft aus der Umgebung aus- oder eintreten. Das Druckausgleichselement 11 besteht aus einer Rohrkonstruktion 13, die durch die Wandung 14 des Gehäuses 10 geführt ist. Die Öffnung 15 der in das Gehäuse 10 führenden Rohrkonstruktion 13 ist mit einer wasserundurchlässigen Membran 16 verschlossen. Außerhalb des Gehäuses 10 ist die Rohrkonstruktion 13 in Richtung der Schwerkraft abgewinkelt. Das abgewinkelte Ende 17 der Rohrkonstruktion 13 ist mit einem doppelten Schnabelventil 18 verschlossen. Im Innenraum 19 der Rohrkonstruktion 13 ist ein Kondensationsblech 20 im Einströmungsbereich der Außenluft 21 angeordnet. Beim Eintritt von Außenluft 21 trifft diese auf das Kondensationsblech 20, wobei die Luftfeuchtigkeit aus der Außenluft 21 kondensiert. Das Kondensationsblech verläuft schräg zu dem Teil des doppelten Schnabelventils 18, der bei Überdruck im Gehäuse 10 die Luft 22 nach außen leitet, und bildet einen Abtropfpunkt 23 aus, von dem aus Kondensat zum doppelten Schnabelventil 18 geleitet wird. Das Kondensat wird bei Überdruck im Gehäuse 10 mit der Luft 22 nach außen geleitet. Im Innenraum 12 des Gehäuses 10 ist zusätzlich zur Trocknung von eintretender Luft ein Behältnis 24 mit einem nicht im Einzelnen dargestellten Trockenmittel angeordnet.

## Patentansprüche

1. Ein Druckausgleichselement für ein Gehäuse (10) mit einer wasserundurchlässigen Membran (16), **dadurch gekennzeichnet, dass** der Membran (16) ein in zwei Richtungen wirkendes Überdruckventil oder eine Kombination von zwei gegensätzlich wirkenden Überdruckventilen (18) vor-oder nachgeschaltet ist,
wobei die Membran (16) und das Überdruckventil oder die Überdruckventile (18) zu einer geschlossenen Einheit zusammengefasst sind, wobei im Inneren (19) im Bereich des nach innen wirkenden Überdruckventils (18) der geschlossenen Einheit ein Kondensationsblech (20) angeordnet ist, das einen Abtropfpunkt (23) aufweist, der im Bereich des nach außen wirkenden Überdruckventils (18) liegt.

2. Das Druckausgleichselement nach Anspruch 2, wobei die geschlossene Einheit aus einer rohrförmigen Konstruktion (13) besteht, die an einem Ende mit der Membran (16) und am anderen Ende mit dem Überdruckventil oder den Überdruckventilen (18) verschlossen ist.

3. Das Druckausgleichselement nach Anspruch 2 oder 3, wobei das nach außen wirkende Überdruckventil (18) am tiefsten Punkt in Retion zur Schwerkraft der geschlossenen Einheit bzw. der rohrförmigen Konstruktion (13) angeordnet ist.

4. Das Druckausgleichselement nach einem der Ansprüche 1 bis 3, wobei auf der der Membran (16) abgewandten Seite des Überdruckventils oder der Überdruckventile (18) eine zweite wasserundurchlässige Membran angeordnet ist, die nur im Bereich des nach innen wirkenden Überdruckventils (18) angeordnet sein kann.

5. Ein Gehäuse, aufweisend ein Druckausgleichselement (11) gemäß einem der Ansprüche 1 bis 4.

6. Das Gehäuse nach Anspruch 5, wobei im Gehäuse (10) ein Mittel zur Entfernung von Luftfeuchtigkeit angeordnet ist.

7. Ein Lithium-Ionen-Akkumulator mit einer aktiven Klimatisierung, **dadurch gekennzeichnet, dass** der Lithium-Ionen-Akkumulator in einem Gehäuse gemäß einem der Ansprüche 5 oder 6 angeordnet ist.

8. Ein Kraftfahrzeug mit einem elektrischen Antriebsmotor zum Antreiben des Kraftfahrzeugs und einem mit dem elektrischen Antriebsmotor verbundenen oder verbindbaren Lithium-Ionen-Akkumulator gemäß Anspruch 7.

## Claims

1. Pressure-equalization element for a housing (10), having a water-impermeable membrane (16), **characterized in that** a pressure-relief valve acting in two directions or a combination of two oppositely acting pressure-relief valves (18) is arranged before or after the membrane (16),
wherein the membrane (16) and the pressure-relief valve(s) (18) are combined to form a closed unit, wherein a condensation plate (20) is arranged in the interior (19) in the region of the inwardly acting pressure-relief valve (18) of the closed unit and has a dripping point (23) which is situated in the region of the outwardly acting pressure-relief valve (18).

2. Pressure-equalization element according to Claim 2, wherein the closed unit consists of a tubular structure (13) which is closed off at one end by the membrane (16) and at the other end by the pressure-relief valve (s) (18) .

3. Pressure-equalization element according to Claim 2 or 3, wherein the outwardly acting pressure-relief valve (18) is arranged at the lowest point in relation to gravitational force of the closed unit or of the tubular construction (13).

4. Pressure-equalization element according to one of Claims 1 to 3, wherein, on that side of the pressure-relief valve(s) (18) which is directed away from the membrane (16), there is arranged a second water-impermeable membrane, which can be arranged only in the region of the inwardly acting pressure-relief valve (18).

5. Housing having a pressure-equalization element (11) according to one of Claims 1 to 4.

6. Housing according to Claim 5, wherein a means for removing air moisture is arranged in the housing (10).

7. Lithium-ion rechargeable battery having active climatic control, **characterized in that** the lithium-ion rechargeable battery is arranged in a housing according to either of Claims 5 and 6.

8. Motor vehicle having an electric drive motor for driving the motor vehicle and having a lithium-ion rechargeable battery according to Claim 7 that is or is able to be connected to the electric drive motor.

## Revendications

1. Élément de compensation de pression pour un boîtier (10) avec une membrane imperméable à l'eau (16), **caractérisé en ce que** la membrane (16) est précédée ou suivie d'une soupape de surpression à action bidirectionnelle ou d'une combinaison de deux soupapes de surpression (18) à action opposée,
la membrane (16) et la soupape de surpression ou les soupapes de surpression (18) étant réunies en une unité fermée, une tôle de condensation (20) étant agencée à l'intérieur (19) dans la zone de la soupape de surpression (18) agissant vers l'intérieur de l'unité fermée, laquelle tôle présente un point d'égouttage (23) qui est situé dans la zone de la soupape de surpression (18) agissant vers l'extérieur.

2. Élément de compensation de pression selon la revendication 2, dans lequel l'unité fermée est constituée d'une structure tubulaire (13) fermée à une extrémité par la membrane (16) et à l'autre extrémité par la soupape de surpression ou les soupapes de surpression (18) .

3. Élément d'équilibrage de pression selon la revendication 2 ou 3, dans lequel la soupape de surpression (18) agissant vers l'extérieur est agencée au point le plus bas par rapport à la force de gravité de l'unité fermée ou de la structure tubulaire (13).

4. Élément d'équilibrage de pression selon l'une quelconque des revendications 1 à 3, dans lequel une deuxième membrane imperméable à l'eau est agencée sur le côté de la soupape de surpression ou des soupapes de surpression (18) détourné de la membrane (16), laquelle peut être agencée uniquement dans la zone de la soupape de surpression (18) agissant vers l'intérieur.

5. Boîtier, présentant un élément de compensation de pression (11) selon l'une quelconque des revendications 1 à 4.

6. Boîtier selon la revendication 5, dans lequel un moyen d'élimination de l'humidité de l'air est agencé dans le boîtier (10).

7. Accumulateur au lithium-ion avec une climatisation active, **caractérisé en ce que** l'accumulateur au lithium-ion est agencé dans un boîtier selon l'une quelconque des revendications 5 ou 6.

8. Véhicule automobile avec un moteur d'entraînement électrique pour entraîner le véhicule automobile et un accumulateur au lithium-ion selon la revendication 7, connecté ou pouvant être connecté au moteur d'entraînement électrique.
